(19) Europäisches Patentamt
European Patent Office
Office européen des brevets

(11) Publication number: 0 187 279 B1

(12) # EUROPEAN PATENT SPECIFICATION

(45) Date of publication of patent specification: 31.05.89

(51) Int. Cl.$^4$: G 11 B 33/04

(21) Application number: 85115587.9

(22) Date of filing: 07.12.85

(54) **Box made of plastic material particulary suited to contain floppy discs for electronic processors.**

(30) Priority: 17.12.84 IT 6445684 u

(43) Date of publication of application:
16.07.86 Bulletin 86/29

(45) Publication of the grant of the patent:
31.05.89 Bulletin 89/22

(84) Designated Contracting States:
AT BE CH DE FR GB LI LU NL SE

(56) References cited:
EP-A-0 130 266
GB-A- 924 481
GB-A-1 462 438
US-A-4 356 918
US-A-4 478 335
US-A-4 479 577

(73) Proprietor: Stocchiero, Olimpio
5 Via Kennedy
I-36050 Montorso Vicentino (IT)

(72) Inventor: Stocchiero, Olimpio
5 Via Kennedy
I-36050 Montorso Vicentino (IT)

(74) Representative: Bonini, Ercole
c/o STUDIO ING. E. Bonini Corso Fogazzaro, 8
I-36100 Vicenza (IT)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 187 279 B1

Courier Press, Leamington Spa, England.

**Description**

The invention realizes a box made of plastic material, particularly suited to contain floppy discs for electronic processors.

There are on the market some boxes for the storage and the filing of floppy discs, which usually consist of a container having the form of a parallelepiped in which some vertical separators are fixed, so as to form separate spaces for the insertion of floppy discs, which are also in the vertical position.

The container is completed by a lid made of plastic material connected to it by means of hinges and capsizable on it or removable from it.

These types of box are rather bulky and difficult to handle when the box is open. Besides, it has been noticed that some users prefer having separate boxes for each group of floppy disc containing homogeneous information, rather than having a box containing several groups of discs with different memorized matters.

The US—A—4 356 918 describes a box for floppy discs with a base section and a pouch section formed by two elements. The two elements are connected together by a hinge which is not coaxial with the hinge that connects the pouch section with the element forming the base section.

Moreover the bottom plate of the pouch section is plane and does not permit a good disposition of the floppy discs in the pouch section when this is open.

The purpose of this invention is to overcome the problems shown as above.

One of the purposes of this invention is that of creating a particularly simple, easy-to-handle box, which also makes the consultation or the extraction of the discs therein contained easier.

Another purpose is that of building a box in which the two parts forming the container space can be rotated by a certain angle, the one in relation to the other, so that the material contained therein can arrange itself according to an open configuration which makes the consultation and the selection easier.

Another purpose which one wants to attain is that the open box be provided with a capsizable lid, which functions also as a support for the box itself.

The invention, so as it is defined in the claims discloses a box made of plastic material, essentially consisting of three elements, the one connected to the others by means of two coaxial hinges being in common to all three of them, in which two of said elements form the pouch section, while the third element functions as a lid when the box is closed, and as a support for the same when it is open. Advantageously, according to the invention, each of the two elements being hinged to each other and constituting the pouch section, has a supporting plate in the shape of a comb with regular and parallel teeth, such that, when the box is open, the supporting plate being thus shaped appears to be practically uniform and without such openings which would allow the falling out or the scattering of the discs contained therein. Said comb-like shape of the plate also permits to keep the bottom surface compact, when the box is closed.

The lid is also hinged on the same axis on which the two elements constituting the box rotate and its shape is such, that, besides insuring the closing of the box, it also functions as a support when the box is open.

The invention will be better understood from the description of a preferred embodiment thereof which is illustrated in the enclosed figures of drawings, where:

Figure 1 shows a cross-section of the box of the invention being in its open position and with the lid in its supporting position;

Figure 2 shows a longitudinal cross-section of the closed box;

Figure 3 is a perspective view of the closed box;

Figure 4 is a cross-section of the closed box showing the detail of the hinges.

With reference to the Figures 1 and 3, the box consists of the three elements 10, 20 and 30. In detail, the elements 10 and 20 are the two parts which form the pouch section of the box and element 30 is the part which functions as a lid and as a support of the box.

Element 10 consists of a flat wall 11 (Figure 3) with a circular upper edge 12 which ends toward the bottom with a bent part 13. Said element 10 presents a supporting plate with teeth having a rectangular profile, which constitutes part of the bottom of the box, where the edges of the discs rest when the box is open, as in Figure 1. Said element 10 also presents at its lateral ends two slats 15 each having a pivot 16 which is inserted into a matching hole belonging to element 20. The bent part 13 of element 10 ends with a projection 39 being visible in Figure 2, having the function of stopping the mutual rotation between the elements 10 and 20.

Element 20 is the second component of the pouch section being connected to element 10 and it consists of a flat wall 21, of two lateral sides 22 and 23 and of a supporting shelf 24 presenting teeth with a rectangular profile, such that, together with the teeth 14 of element 10 being juxtaposed to them, they create a supporting surface which varies according to the variation of the opening angle of the two elements 10 and 20 and which lacks openings which might jeopardize the safekeeping of the discs contained between the walls 11 and 21. Wall 21 ends at the bottom with a bend 25, in the inside end-part of which there is an indentation 26 having such a thickness as to allow the housing of projection 39 being present on the bent wall 13 of element 10.

The engagement of projection 39 with identation 26 determines the maximum angular opening between the two elements 10 and 20 of the box, as can be seen in Figure 1.

In order to make the assembly of the two elements 10 and 20 easier, some constructive expedients have been adopted which insure the maximum elasticity of the parts to be matched.

For this reason the slats 15 supporting the pivots 16 of element 10 have a narrow attachment base and a reduced thickness in comparison with the thickness of the elements 10 and 20. Furthermore as can be seen in Figure 4, the lateral walls of elements 20 which support hub 27 are detached from the edges 28 and 29 of the tooth-shaped shelf 24, thereby giving the necessary elasticity to the walls, thus making the assembly of the two elements 10 and 20 easy.

Lid 30 consists of a flat wall 31 having a circular edge which, when the box is closed, matches with edge 12 of element 10 and connects itself to a Wall 32 being orthogonal to 31 which closes the opening of the box. The lid has two equal lateral sides 33 and 34 and their profile can be seen in Figure 3. Each of them presents a circular terminal part 35 having a hole 36, into which hubs 27 of element 20 is inserted, so that the three elements constituting the box are connected with each other. When the box is open, by rotating lid 30 this is made to function as a support of the box, as can be seen in Figure 1. In this case element 20 rests in the grooves 37 and 38.

**Claims**

1. A box particularly suited to hold floppy discs for electronic processors comprising three elements (10, 20, 30) made of plastic material, two of which (10, 20) forming the pouch section and the third (30) functioning as a lid when the box is closed and as a support when the box is open, whereby said two elements forming the pouch section can be opened by a certain predetermined angle, characterized in that the three elements (10, 20, 30) are connected to each other by means of two common coaxial hinges and in that each of said elements (10, 20) forming the pouch section is provided with a bottom plate (14, 24) shaped as comb having rectangular, parallel and meshing teeth, so that they constitute a supporting surface for the material contained therein.

2. A box according to claim 1, characterized in that the fixed angle of opening between the two elements (10, 20) forming the pouch section is determined by the engagement between a projection (39) present on the end bent part of one element (10) forming the pouch section and a corresponding indentation (26) present on the other element (20).

3. A box according to claim 1, characterized in that the hinges contain a pivot (16) on one of the elements (10) forming the pouch section, which pivot is supported by slats (15) having a reduced thickness in comparison with the average thickness of the elements (10, 20, 30) constituting the box, in order to provide said slats with the elasticity necessary for the assembly.

4. A box according to the preceding claims, characterized by the fact that the lateral walls of the element (20) support a hub (27) in which the pivot rests and are detached from the edges (28, 29) of the tooth-shaped bottom plate (24), in order to provide the elasticity necessary for the assembly.

**Patentansprüche**

1. Schachtel besonders dazu geeignet, Floppy Disks für elektronische Rechner zu enthalten, bestehend aus drei Elementen (10, 20, 30) aus Kunststoff, woven zwei (10, 20) die Tasche bilden und das dritte (30) als Deckel dient, wenn der Schactel geschlossen ist und als Stuetzfläche, wenn der Schachtel offen ist wobei die zwei Elemente, die die Tasche bilden, zu einem vorausbestimmten Winkel geöffnet werden können, dadurch gekennzeichnet, dass die drei Elemente (10, 20, 30) mittels zwei gemeinsamen, koaxialen Scharniere miteinander verbunden sind und das jedes dieser Elemente (10, 20), die die Tasche bilden, mit einer Bodenplatte (14, 24) versehen sind, die als ein Kamm mit rechteckigen, parallelen und ineinandergreifenden Zinken gebildet ist, damit sie eine Stützfläche für das darin enthaltene Material bilden.

2. Schachtel nach Anspruch 1, dadurch gekennzeichnet, dass der feste Öffnungswinkel zwischen den zwei Elementen (10, 20), die die Tasche bilden, durch die Verbindung zwischen einem Vorsprung (39), der auf dem gebogenen Ende eines Elements (10) zur Bildung der Tasche vorhanden ist, und einer entsprechenden im anderen Element (20) vorhandenen Vertiefung (26) bestimmt wird.

3. Schachtel nach Anspruch 1, dadurch gekennzeichnet, dass die sich auf einem der Elemente (10) zur Bildung der Tasche befindlichen Scharniere einen Zappen (16) enthalten, der durch Leisten (15) gestützt wird, deren Dicke dünner als die durchschnittliche Dicke der drei Elemente (10, 20, 30) ist, damit diese Leisten die zum Zusammenbau erforderliche Elastizität aufweisen.

4. Schachtel nach einem der vorhergehenden Ansprüche, dadurch gekennzeichnet, dass die Seitwände des Elements (20) eine Nabe (27) stützen, worin der Zapfen sich befindet, und dass sie zu dem Kanten (28, 29) der als Kamm gebildeten Bodenplatte (24) einen Abstand aufweist, damit die zum Zusammenbau erforderliche Elastizität gewährleistet wird.

**Revendications**

1. Boîte particulièrement adapte à contenir des floppy disques pour des ordinateurs électroniques comprenant trois éléments (10, 20, 30) en matière plastique, deux desquels (10, 20) forment la section de la poche, et le troisième (30) qui sert de convercle quand la boîte est fermée et de support quand la boîte est ouverte, les dits deux éléments formant la section de la poche pouvant être ouverts à un angle prédéterminé, caractérisée en ce que les trois éléments (10, 20, 30) sont rattachés l'un à l'autre par le moyen de deux charnières co-axiales en commun et en ce que chacun de dits éléments formant la section de la poche est pourvu d'une plaque de fond (14, 24) ayant la forme d'un peigne à dents rectanguliers parallèles et alternés de façon qu'ils constituent une surface de support pour le matériel y contenu.

2. Boîte selon la revendication 1, caractérisée en ce que l'angle fixe d'ouverture entre les deux éléments (10, 20) formant la section de la poche est déterminé par l'engagement entre une projecture (39) présente à l'extremité courbée d'un des éléments (10) formant la section de la poche et une échancrure correspondante (26) présente sur l'autre élément (20).

3. Boîte selon la revendication 1, caractérisée en ce que les charnières présentes sur un des éléments (10) contiennent un pivot (16), étant supporté par des lames (15) ayant une épaisseur plus mince que l'épaisseur moyenne des éléments (10, 20, 30) formant la boîte, à afin de donner à ces lames l'élasticité necessaire pour le montage.

4. Boîte selon les revendications précédentes, caractérisée en ce que les parois latérales de l'élément (20) supportent un moyeu (27) contenant le pivot et qu'elles sont detachées des bords (28, 29) de la plaque de fond à dents (24) pour donner l'élasticité necessaire pour le montage.

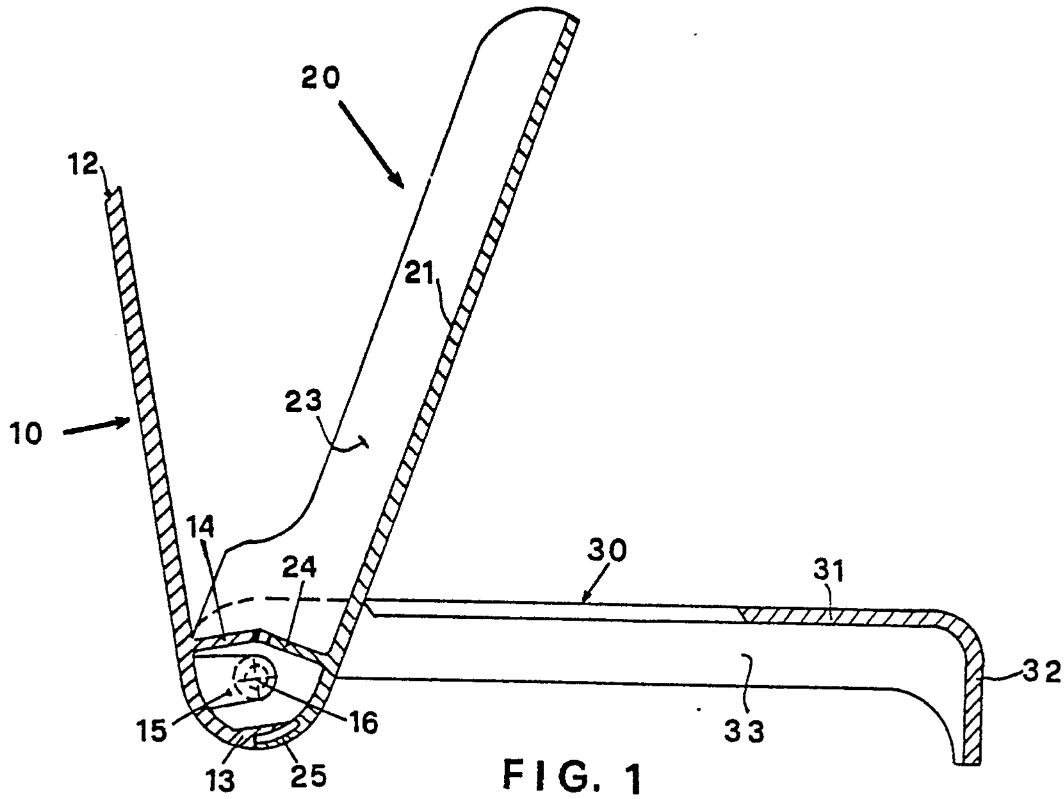


FIG. 1

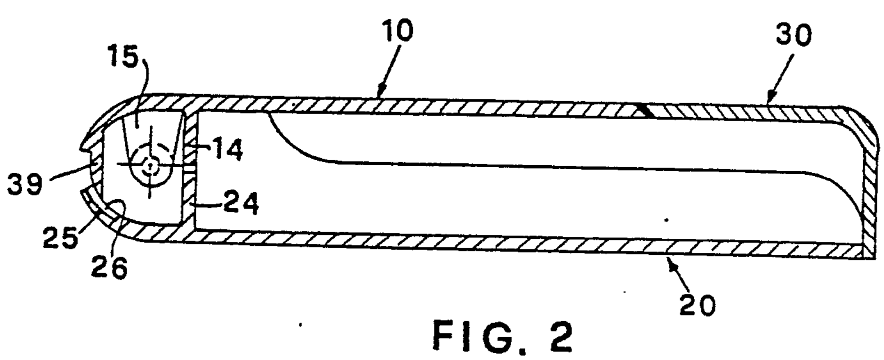


FIG. 2

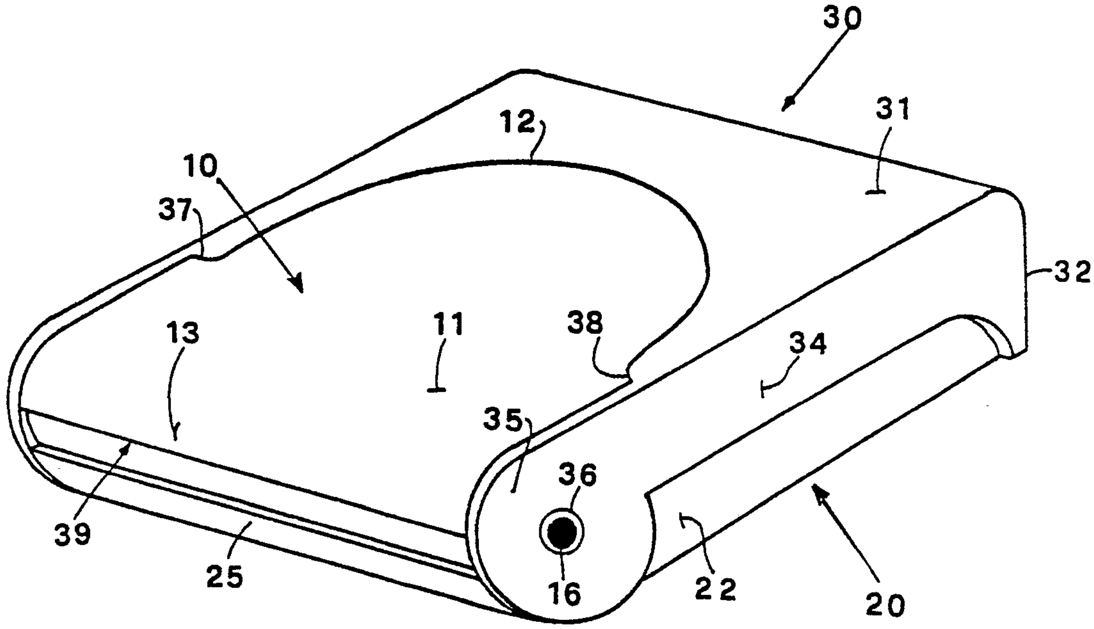
30
31
12
10
37
32
13
11
38
34
35
36
39
25
16
22
20

FIG. 3

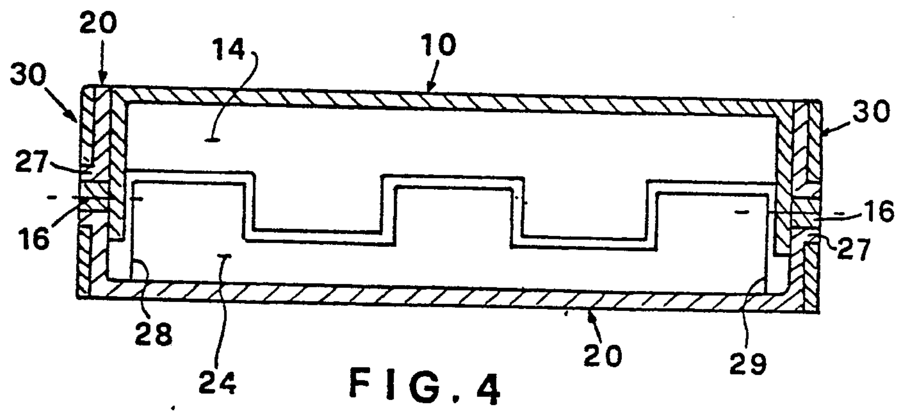
20
14
10
30
30
27
16
16
27
28
24
20
29

FIG. 4